**Europäisches Patentamt**

**European Patent Office**

**Office européen des brevets**

(19)

(11) Numéro de publication : **0 347 275 B1**

(12)

# FASCICULE DE BREVET EUROPEEN

(45) Date de publication du fascicule du brevet :
**27.12.91 Bulletin 91/52**

(51) Int. Cl.⁵ : **B60T 8/26, B60T 11/34, B60T 17/22**

(21) Numéro de dépôt : **89401482.8**

(22) Date de dépôt : **31.05.89**

(54) **Circuit hydraulique de freinage comprenant une valve d'équilibrage.**

(30) Priorité : **15.06.88 FR 8807997**

(43) Date de publication de la demande :
**20.12.89 Bulletin 89/51**

(45) Mention de la délivrance du brevet :
**27.12.91 Bulletin 91/52**

(84) Etats contractants désignés :
**DE FR GB IT SE**

(56) Documents cités :
**DE-A- 2 815 336**
**DE-A- 3 310 082**
**FR-A- 2 254 463**
**FR-A- 2 271 090**
**GB-A- 2 042 662**

(73) Titulaire : **BENDIX EUROPE Services Techniques S.A.**
**126 rue de Stalingrad**
**F-93700 Drancy (FR)**

(72) Inventeur : **Picot, Pascal BENDIX FRANCE**
**126, rue de Stalingrad**
**F-93700 Drancy (FR)**

(74) Mandataire : **Lejet, Christian**
**Bendix Europe Service Techniques Service Brevets 126 rue de Stalingrad**
**F-93700 Drancy (FR)**

EP 0 347 275 B1

Jouve, 18, rue Saint-Denis, 75001 PARIS

## Description

La présente invention concerne les circuits hydrauliques de freinage pour véhicules automobiles et, plus particulièrement, un tel circuit comprenant un maître-cylindre tandem, un compensateur hydraulique et une valve d'équilibrage.

Un tel circuit est notamment décrit dans FR-A-2254463. Selon ce document, ce circuit comprend :

— un compensateur hydraulique relié au circuit de freinage des roues arrière du véhicule et comprenant, dans un alésage un piston formant une partie d'un moyen de clapet déplaçable sous l'effet de la pression régnant dans le circuit de freinage des roues arrière à l'encontre d'un ressort ;

— un maître-cylindre tandem dont les deux chambres de travail sont respectivement reliées au circuit de freinage des roues avant et au compensateur hydraulique ; et

— une valve d'équilibrage qui comprend un piston de valve monté à coulissement dans un alésage et déterminant de part et d'autre des première et deuxième chambres respectivement reliées aux chambres de travail du maître-cylindre, le piston de valve étant sollicité vers une position de repos par un ressort.

Le circuit de ce document est prévu pour court-circuiter le compensateur hydraulique en cas de défaillance du circuit de freinage des roues avant. Dans ce but, un circuit auxiliaire de freinage des roues arrière, normalement hors service, relie la deuxième chambre de la valve d'équilibrage et directement la sortie du compensateur hydraulique, de manière à mettre ce dernier hors service en cas de défaillance du circuit de freinage des roues avant. Une telle mise hors service du compensateur présente l'inconvénient de ne plus contrôler la pression dans le circuit de freinage des roues arrière, et de ce fait, de risquer un blocage inopportun de ces roues.

La présente invention a pour but d'obvier à cet inconvénient, et d'obtenir un circuit hydraulique de freinage dans lequel, en cas de défaillance de la partie associée aux freins avant, seul le point de coupure du compensateur est modifié pour que les roues arrière assurent un freinage plus important que normalement sans atteindre un blocage inopportun de celles-ci.

Dans ce but, le compensateur comprend en outre un piston d'actionnement déplaçable à coulissement pour agir sur le piston formant une partie d'un moyen de clapet, sous l'effet de la pression régnant dans une chambre de commande définie entre l'extrémité du piston d'actionnement et le fond de l'alésage du compensateur, cette chambre de commande étant normalement reliée à un réservoir basse pression et, en cas de défaillance du circuit de freinage des roues avant, à la chambre de travail reliée au circuit de freinage des roues arrière du maître-cylindre par l'intermédiaire de la deuxième chambre de la valve d'équilibrage.

Selon un autre aspect de l'invention, le circuit hydraulique comprend en outre un élément de témoin destiné à se déplacer à la suite d'un actionnement du piston de valve en cas de défaillance de l'un des circuits de freinage.

De préférence, cet élément de témoin verrouille le piston de valve dans la position qu'il occupe après une défaillance.

L'invention sera mieux comprise et d'autres buts, avantages et caractéristiques de celle-ci apparaîtront plus clairement à la lecture de la description qui suit d'un mode préféré de réalisation donné à titre d'exemple et à laquelle une planche de dessin est jointe sur laquelle :

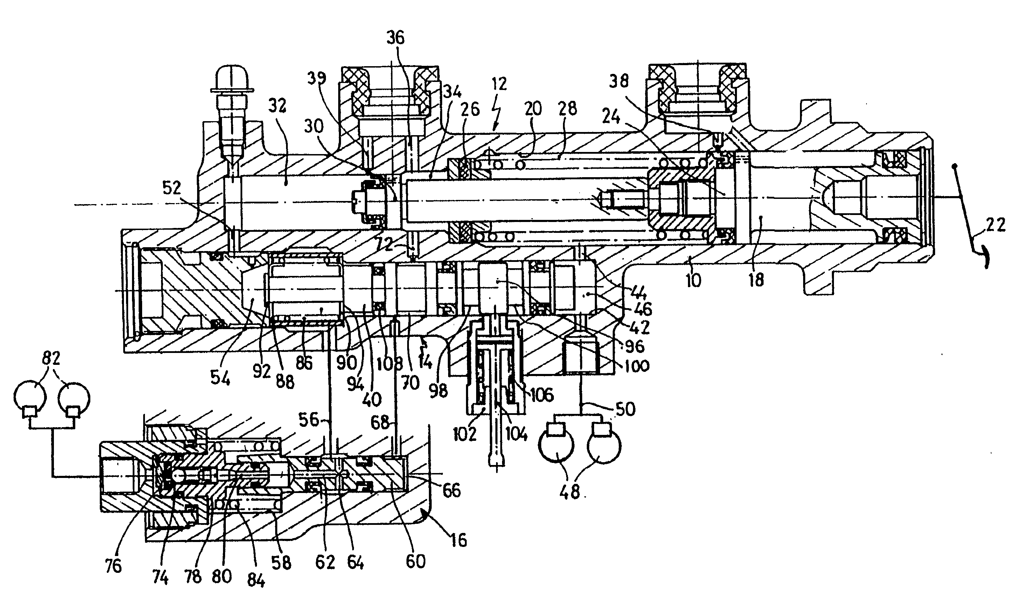

— la Figure unique représente schématiquement en coupe longitudinale, un circuit hydraulique conforme à la présente invention.

En référence maintenant à cette Figure unique, un corps 10 comprend un maître-cylindre tandem 12 et un valve d'équilibrage 14. Comme il sera décrit plus en détail ci-dessous, la valve d'équilibrage est reliée à un compensateur hydraulique 16.

Le maître-cylindre 12 comprend un piston étagé unique 18 monté à coulissement dans un alésage étagé 20 dans le corps 10 et destiné à être déplacé par une pédale de freinage 22. Le piston étagé 18 comprend une première surface 24 qui délimite, avec un joint annulaire 26 monté fixe dans l'alésage 20, une première chambre de travail 28. Le piston étagé 18 comporte, de plus, une tête 30 de diamètre inférieur à celui de la surface 24, qui définit avec l'alésage 20 une deuxième chambre de travail 32. Une chambre intermédiaire 34 de volume variable est formée entre la tête 30 et le joint annulaire 26 et communique avec un réservoir de fluide à basse pression (non représenté) par un passage 36. Les deux chambres de travail 28 et 32 communiquent également avec le réservoir basse pression, dans la position de repos illustrée, par un trou de dilatation 38, 39.

La valve d'équilibrage 14 comprend un piston étagé 40 monté à coulissement étanche dans un alésage 42 formé dans le corps 10. La première chambre de travail 28 communique par un passage 44 avec une première chambre de valve 46 formée entre une extrémité du piston étagé 40 et une extrémité de l'alésage 42. Cette première chambre de valve 46 est reliée aux freins de roues avant 48 par un conduit 50. La deuxième chambre de travail 32 du maître-cylindre tandem 12 communique par un passage 52 avec une deuxième chambre de valve 54 définie à l'extrémité opposée du piston étagé 40 de la valve d'équilibre 14.

Le compensateur 16 comprend un alésage étagé 58, dans la partie de diamètre réduit duquel est monté à coulissement étanche un piston d'actionnement 60 qui comporte un alésage longitudinal 62 qui communique avec le conduit 56 par des ouvertures 64. Une chambre 66 est définie entre une extrémité du piston d'actionnement 60 et l'alésage 58 et cette chambre 66 est normalement en communication hydraulique avec le réservoir basse pression par un conduit 68, une chambre intermédiaire annulaire 70 formée entre le piston étagé de valve 40 et l'alésage 42 de la valve d'équilibre 14, un passage 72 et la chambre intermédiaire 34 du maître-cylindre 12. De façon connue en soi, le compensateur comprend un clapet à bille 74 dont le siège 76 est formé sur un piston 78 monté à coulissement étanche dans l'alésage étagé 58. Du fluide hydraulique en provenance de la deuxième chambre de travail 32 passe de l'alésage longitudinal 62 par un alésage 80 formé dans le piston 78 du compensateur, par le clapet à bille 74 qui, dans la position de repos illustrée, est ouvert, vers les freins de roues arrière 82 du véhicule. Lors d'un freinage du véhicule, quand la pression de freinage agissant sur la section utile du piston 78 atteint un niveau déterminé, le piston 78 qui se déplace à l'encontre d'un ressort de rappel 84 provoque la fermeture du clapet à bille 74. L'augmentation de freinage des roues arrière est ensuite limitée.

Le piston 40 de la valve d'équilibrage 14 est sollicité vers sa position de repos illustrée par un ressort de rappel 86. Le piston 40 comprend deux surfaces d'appui annulaires 92 et 94 chacune disposée en contact avec un élément annulaire respectif 88 et 90 de façon qu'un déplacement du piston 40 dans l'une des deux directions comprime le ressort de rappel 86. Le piston 40 comporte, de plus, une partie 96, dont le diamètre est sensiblement égal à celui de l'alésage 42, située entre deux gorges analogues 98 et 100 de diamètre inférieur. Un élément de témoin 102 est disposé sensiblement perpendiculairement à l'axe de l'alésage 42 et comprend une tige radiale 104 poussée vers l'alésage 42 par un ressort 106. L'extrémité de la tige 104 fait saillie hors du corps 10.

Lors d'une mise en oeuvre du dispositif, chaque extrémité du piston 40 de la valve d'équilibrage 14 est soumise à la pression hydraulique régnant dans la chambre de travail associée 28, 32. Si la pression régnant dans la chambre de travail 32 est légèrement supérieure à celle régnant dans la chambre 28, le piston 40 se déplace légèrement à l'encontre du ressort de rappel 86 et les pressions tendent ainsi à s'égaliser.

Dans le cas d'une défaillance du circuit hydraulique associé aux freins de roues avant 48 du véhicule, une mise en oeuvre du dispositif n'entraîne une pressurisation que de la deuxième chambre de travail 32. La pression régnant dans la deuxième chambre de valve 54 excède celle régnant dans la première chambre de valve 46, qui est sensiblement à la pression atmosphérique, et donc le piston de valve 40 se déplace vers la droite (en regardant le dessin) à l'encontre du ressort 86. Quand la partie 96 du piston 40 a dépassé l'extrémité de l'élément de témoin 102, cette dernière entre dans la gorge 98 du piston 40 sous l'effet du ressort 106. Le piston 40 est ainsi retenu dans sa position déplacée. A la suite du déplacement du piston 40, un joint 108 sur le piston 40 qui, dans la position de repos du piston 40, isolait le conduit 68 de la deuxième chambre de valve 54, passe de l'autre côté du conduit 68, permettant la communication de ce dernier avec la deuxième chambre de valve 54. Du fluide sous pression passe par le conduit 68 vers la chambre 66 du compensateur provoquant le déplacement du piston d'actionnement 60 qui vient en butée contre le piston 78 du compensateur 16. La pressurisation des freins de roues arrière 82 se fait normalement par le conduit 56, mais la fermeture du clapet à bille 74 ne se produit pas à la pression prédéterminée originale car la force exercée par le piston d'actionnement 60 sur le piston 78 empêche ce dernier de se déplacer avant que la pression de freinage n'arrive à un niveau plus élevé. Un freinage plus important des roues arrière est donc assuré par un relèvement du point de coupure du compensateur.

Le fait que l'élément de témoin 102 engage et verrouille le piston 40 a pour avantage que, lors d'un freinage subséquent, la course morte du piston du maître-cylindre 12 est sensiblement réduite, car il n'est plus possible de déplacer le piston 40.

La tige 104 de l'élément de témoin 102 sert à donner une indication visuelle de la défaillance et permet également une remise en position du piston 40 lors de la réparation du circuit défaillant, l'opérateur tirant sur la tige 104.

Si le circuit associé aux roues arrière est défaillant, le circuit primaire restant en état de fonctionnement, le piston 40 est déplacé vers la gauche lors d'une mise en oeuvre du dispositif et l'élément de témoin 102 entre dans la gorge 100 du piston 40.

## Revendications

1. Circuit hydraulique de freinage pour véhicule automobile, comprenant :

— un compensateur hydraulique (16) relié au circuit de freinage des roues arrière (82) du véhicule et comprenant, dans un alésage (58) un piston (78) formant une partie d'un moyen de clapet déplaçable sous l'effet de la pression régnant dans le dit circuit de freinage des roues arrière à l'encontre d'un ressort (84) ;

— un maître-cylindre tandem (12) dont les deux chambres de travail (28, 32) sont respectivement reliées au circuit de freinage des roues avant (48) et au dit compensateur hydraulique (16) ; et

— une valve d'équilibrage (14) qui comprend un piston de valve (40) monté à coulissement dans un alésage (42) et déterminant de part et d'autre des première et deuxième chambres (46, 54) respectivement reliées aux dites chambres de travail (28, 32) du dit maître-cylindre (12), le dit piston de valve (40) étant sollicité vers une position de repos par un ressort (86), caractérisé en ce que le dit compensateur (16) comprend en outre un piston d'actionnement (60) déplaçable à coulissement pour agir sur le dit piston (78) formant une partie d'un moyen de clapet, sous l'effet de la pression régnant dans une chambre de commande (66) définie entre l'extrémité du dit piston d'actionnement (60) et le fond du dit alésage (58), la dite chambre de commande (66) étant normalement reliée à un réservoir basse pression et, en cas de défaillance du circuit de freinage des roues avant, à la chambre de travail (32) reliée au circuit de freinage des roues arrière du maître-cylindre (12) par l'intermédiaire de la dite deuxième chambre (54) de la dite valve d'équilibrage (14).

2. Circuit hydraulique selon la revendication 1, caractérisé en ce que, le dit maître-cylindre (12) et la dite valve d'équilibrage (14) comprenant chacun une chambre intermédiaire (34, 70) reliée à un réservoir basse pression, la dite chambre de commande (66) du dit compensateur (16) est, en fonctionnement normal, reliée à la dite chambre intermédiaire (70) de la dite valve d'équilibrage (14) et en est isolée en cas de défaillance du dit circuit de freinage des roues avant.

3. Circuit hydraulique selon l'une quelconque des revendications 1 et 2, caractérisé en ce qu'il comprend en outre un élément de témoin (102) destiné à se déplacer à la suite d'un actionnement du piston de valve (40) en cas de défaillance de l'un des circuits de freinage (48, 82).

4. Circuit hydraulique selon la revendication 3, caractérisé en ce que le dit élément de témoin (102) verrouille le dit piston de valve (40) dans la position qu'il occupe après une défaillance.

5. Circuit hydraulique selon la revendication 4, caractérisé en ce que le dit piston de valve (40) comporte au moins une gorge, et que le dit élément de témoin (102) est constitué par une tige radiale (104) sollicitée en butée contre le dit piston de valve (40) par un ressort (106), la dite tige radiale (104) pénétrant dans la dite gorge lors d'un déplacement déterminé du dit piston de valve (40) faisant suite à la défaillance de l'un des dits circuits de freinage (48, 82).

## Patentansprüche

1. Hydraulischer Bremskreis für ein Kraftfahrzeug, mit :
— einem hydraulischen Kompensator (16), der mit dem Bremskreis der Hinterräder (82) des Kraftfahrzeuges verbunden ist und in einer Bohrung (58) einen Kolben (78) umfaßt, der einen Teil eines Ventilmittels bildet, das unter der Wirkung des in diesem Kreis zum Bremsen der Hinterräder herrschenden Druckes gegen eine Feder (84) verschiebbar ist ;
— einem Tandem-Hauptzylinder (12), dessen beide Arbeitskammern (28, 32) mit dem Kreis zum Bremsen der Vorderräder (48) bzw. mit dem hydraulischen Kompensator (16) verbunden sind ; und
— einem Ausgleichventil (14), das einen in einer Bohrung (42) verschiebbaren Ventilkolben (40) umfaßt und beiderseits eine erste Kammer (46) sowie eine zweite Kammer (54) bildet, welche je mit einer dieser Arbeitskammern (28, 32) des Hauptzylinders (12) verbunden sind, wobei dieser Ventilkolben (40) von einer Feder (86) zu einer Ruhesstellung hin beaufschlagt wird, dadurch gekennzeichnet, daß der Kompensator (16) ferner einen Betätigungskolben (60) umfaßt, der gleitend verschiebbar ist, um auf den einen Teil eines Ventilmittels bildenden Kolben (78) unter der Wirkung des in einer Steuerkammeer (66) herrschenden Druckes einzuwirken, welche zwischen dem Ende dieses Betätigungskolbens (60) und dem Boden dieser Bohrung (58) definiert ist, wobei diese Steuerkammer (66) normalerweise mit einem Niederdruck-Behälter und bei einem Ausfall des Kreises zum Bremsen der Vorderräder mit der Arbeitskammer (32) verbunden ist, die über diese zweite Kammer (54) dieses Ausgleichsventils (14) mit dem Kreis zum Bremsen der Hinterräder des Hauptzylinders (12) verbunden ist.

2. Hydraulischer Kreis nach Anspruch 1, dadurch gekennzeichnet, daß der Hauptzylinder (12) und das Ausgleichventil (14) jeweils eine Zwischenkammer (34, 70), die mit einem Niederdruck-Behälter verbunden ist, umfassen, wobei die Steuerkammer (66) des Kompensators (16) im Normalbetrieb mit dieser Zwischenkammer (70) des Ausgleichventils (14) verbunden und bei einem Ausfall des Kreises zum Bremsen der Vorderräder von ihr getrennt ist.

3. Hydraulischer Kreis nach Anspruch 1 oder 2, dadurch gekennzeichnet, daß er ferner ein Anzeigeelement (102), das dazu bestimmt ist, infolge einer Betätigung des Ventilkolbens (40) bei einem Ausfall eines der Bremskreise (48, 82) verschoben zu werden, umfaßt.

4. Hydraulischer Kreis nach Anspruch 3, dadurch gekennzeichnet, daß das Anzeigeelement (102) den Ventilkolben (40) in der Position, die es nach einem Ausfall einnimmt, verriegelt.

5. Hydraulischer Kreis nach Anspruch 4, dadurch gekennzeichnet, daß der Ventilkolben (40) wenigstens eine Rille umfaßt und daß das Anzeigeelement (102) aus einer radialen Stange (104) besteht, die durch eine Feder (106) in Anlage an den Ventilkolben gedrückt wird, wobei diese radiale Stange (104) in diese Rille bei einer bestimmten Verschiebung des Ventilkolbens (40), die einem Ausfall eines der Bremskreise (48, 82) folgt, eingeführt wird.

## Claims

1. Hydraulic brake circuit for a motor vehicle, comprising :

— a hydraulic compensator (16) connected to the brake circuit for the rear wheels (82) of the vehicle and comprising, in a bore (58), a piston (78) forming part of a shutter means displaceable counter to a spring (84) under the effect of the pressure prevailing in said rear-wheel brake circuit ;

— a tandem master cylinder (12), the two working chambers (28, 32) of which are connected respectively to the front-wheel brake circuit (48) and to said hydraulic compensator (16) ; and

— a balancing valve (14) which comprises a valve piston (40) mounted slidably in a bore (42) and defining on either side first and second chambers (46, 54) connected respectively to said working chambers (28, 32) of said master cylinder (12), said valve piston (40) being stressed towards a rest position by a spring (86), characterised in that said compensator (16) comprises, furthermore, an actuating piston (60) displaceable slidably so as to act on said piston (78) forming part of a shutter means under the effect of the pressure prevailing in a control chamber (66) defined between the end of said actuating piston (60) and the bottom of said bore (58), said control chamber (66) normally being connected to a low-pressure reservoir and, in the event of a failure of the front-wheel brake circuit, to the working chamber (32) connected to the rear-wheel brake circuit of the master cylinder (12) by means of said second chamber (54) of said balancing valve (14).

2. Hydraulic circuit according to Claim 1, characterised in that said master cylinder (12) and said balancing valve (14) each comprising an intermediate chamber (34, 70) connected to a low-pressure reservoir, said control chamber (66) of said compensator (16) is connected, during normal operation, to said intermediate chamber (70) of said balancing valve (16) and is isolated from it in the event of a failure of said front-wheel brake circuit.

3. Hydraulic circuit according to either of Claims 1 and 2, characterised in that it comprises, furthermore, a monitoring element (102) intended for being displaced as a result of an actuation of the valve piston (40) in the event of a failure of one of the brake circuits (48, 82).

4. Hydraulic circuit according to Claim 3, characterised in that said monitoring element (102) locks said valve piston (40) in the position which it occupies after a failure.

5. Hydraulic circuit according to Claim 4, characterised in that said valve piston (40) comprises at least one groove, and in that said monitoring element (102) consists of a radial rod (104) stressed up against said valve piston (40) by a spring (106), said radial rod (104) penetrating into said groove during a specific displacement of said valve piston (40) following the failure of one of said brake circuits (48, 82).